Europäisches Patentamt

**European Patent Office**

Office européen des brevets

(19)

(11) Numéro de publication: **0 003 203**
**B1**

(12) **FASCICULE DE BREVET EUROPEEN**

(45) Date de publication du fascicule du brevet: **14.07.82**

(21) Numéro de dépôt: **79400028.1**

(22) Date de dépôt: **15.01.79**

(51) Int. Cl.³: **H 04 B 7/005,**
**H 04 B 17/00, H 04 B 7/17**

(54) **Procédé et dispositif pour mesurer les distorsions dues au milieu de propagation dans les faisceaux hertziens numériques à grande capacité.**

(30) Priorité: **17.01.78 FR 7801205**

(43) Date de publication de la demande:
**25.07.79 Bulletin 79/15**

(45) Mention de la délivrance du brevet:
**14.07.82 Bulletin 82/28**

(84) Etats contractants désignés:
**DE FR GB IT NL**

(56) Documents cités:
**L'ONDE ELECTRIQUE, volume 55, n° 7, août/septembre 1975, Paris**
**H. P. WALKER: "Automatic selective level measuring set: design and application", pages 391 à 397**

(73) Titulaire: **SOCIETE ANONYME DE TELECOMMUNICATIONS**
**40 avenue de New York**
**F-75116 Paris (FR)**

(72) Inventeur: **François, René**
**8 avenue de la Mésange**
**F-94100 Saint Maur des Fossés (FR)**

(74) Mandataire: **Bloch, Robert**
**39 avenue de Friedland**
**F-75008 Paris (FR)**

(56) References cited:
**"Handbuch für Hochfrequenz und Elektrotechnicker", Band VII, 1964, Berlin,**
**Verlag für Radio-Foto-Kinotechnik GmbH, Kapitel "Rauschgenerator und ihre Anwendung", Abschnitt III § 2b "Trägerfrequenztechnik", Seite 285**

Courier Press, Leamington Spa, England.

### Procédé et dispositif pour mesurer les distorsions dues au milieu de propagation dans les faisceaux hertziens numériques à grande capacité.

La présente invention concerne un procédé pour mesurer l'affaiblissement sélectif exercé par le milieu de propagation sur un faisceau hertzien numérique, ainsi qu'un dispositif pour la mise en oeuvre de ce procédé de mesure.

Les évanouissements qui apparaissent dans le milieu de propagation d'un faisceau hertzien se traduisent à la réception par une réduction du niveau du champ reçu. Dans le cas d'un faisceau hertzien numérique à grande capacité, la bande de fréquence transmise est très large, et la profondeur d'évanouissement varie en fonction de la fréquence à l'intérieur de la bande transmise. Ceci entraîne des distorsions d'amplitude et de phase qui interrompent la liaison bien que le niveau du champ reçu puisse être globalement suffisant.

On sait déjà, d'après le livre "Handbuch für Hochfrequenz- und Elektrotechniker", tome VII, Edition 1964, Berlin, Verlag für Radio-Foto-Kinotechnik GmbH, affecter une bande à une voie de transmission de signaux analogiques multiplexés par division en fréquence. Toutefois, ce document concerne une porteuse modulée dont le spectre varie en fonction du nombre de voies occupées et n'est donc pas constant ni connu, comme dans le cas de la présente invention. En outre, ce document traite des mesures de puissance indirectes et ponctuelles, effectuées en dehors de la bande de transmission.

L'invention vise donc un procédé pour mesurer les distorsions dues au milieu de propagation sur un faisceau hertzien numérique, de manière à fournir les informations nécessaires à une correction appropriée.

L'invention a pour objet un procédé pour mesurer les distorsions imposées par le milieu de propagation à des signaux transmis, dans une bande de fréquence déterminée, par un faisceau hertzien numérique, caractérisé par le fait qu'on mesure le puissance moyenne respectivement reçue dans une pluralité de bandes de fréquence élémentaires réparties à l'intérieur de ladite bande de transmission et appartenant à ladite bande et on soustrait les valeurs mesurées des puissances théoriques relatives aux bandes élémentaires respectives.

L'invention utilise le fait que le signal numérique brassé (scramblé) qui module la porteuse hyperfréquence est aléatoire ou semi-aléatoire, ce qui donne statistiquement un spectre, par exemple de type sin x/x, et que les variations du milieu de propagation sont relativement lentes. Dans ces conditions, on pourra déterminer les puissances moyennes reçues dans les bandes élémentaires sur une durée à la fois très grande par rapport à l'intervalle de temps d'un élément du signal numérique, et faible par rapport à la vitesse des variations du milieu. Comme on connaît par ailleurs le spectre de la porteuse modulée par le signal numérique en propagation normale (sans évanouissement), il est facile de déduire par soustraction la caractéristique affaiblissement/fréquence. La connaissance de cette caractéristique peut ensuite servir de base à une correction qui compense les distorsions dues au milieu.

Par l'article de H. P. Walker "Automatic selective level measuring set: design and application" publié dans l'Onde électrique d'août/septembre 1975, on connait déjà un système d'analyse et de contrôle de canaux dans un système de télécommunications, notamment des puissances et des niveaux de bruit.

Toutefois, la présente invention concerne également un dispositif pour la mise en oeuvre du procédé tel que caractérisé ci-dessus, destiné à mesurer les distorsions imposées par le milieu de propagation à des signaux transmis dans une bande de fréquence déterminée par un faisceau hertzien numérique et reçus par une station de réception hertzienne.

Le dispositif de l'invention est caractérisé par le fait qu'il comprend un analyseur de spectre relié à la sortie de l'amplificateur à fréquence intermédiaire de la station de réception, un séquenceur de balayage commandant ledit analyseur de manière que l'analyseur délivre successivement la puissance moyenne du signal reçu dans différentes bandes de fréquence élémentaires réparties à l'intérieur de la bande de transmission, une mémoire dans laquelle sont enregistrées les puissances théoriques relatives aux différentes bandes élémentaires, ladite mémoire étant également commandée par le séquenceur, et un amplificateur différentiel dont les entrées sont reliées à la sortie de l'analyseur de spectre et à la mémoire.

L'invention sera bien comprise à la lecture de la description suivante, faite en se référant au dessin annexé, sur lequel:

La figure 1 illustre sous la forme de courbes le procédé de mesure selon l'invention, et

La figure 2 représente sous forme de schéma par blocs une partie d'une station de réception hertzienne équipée d'un dispositif de mesure selon l'invention.

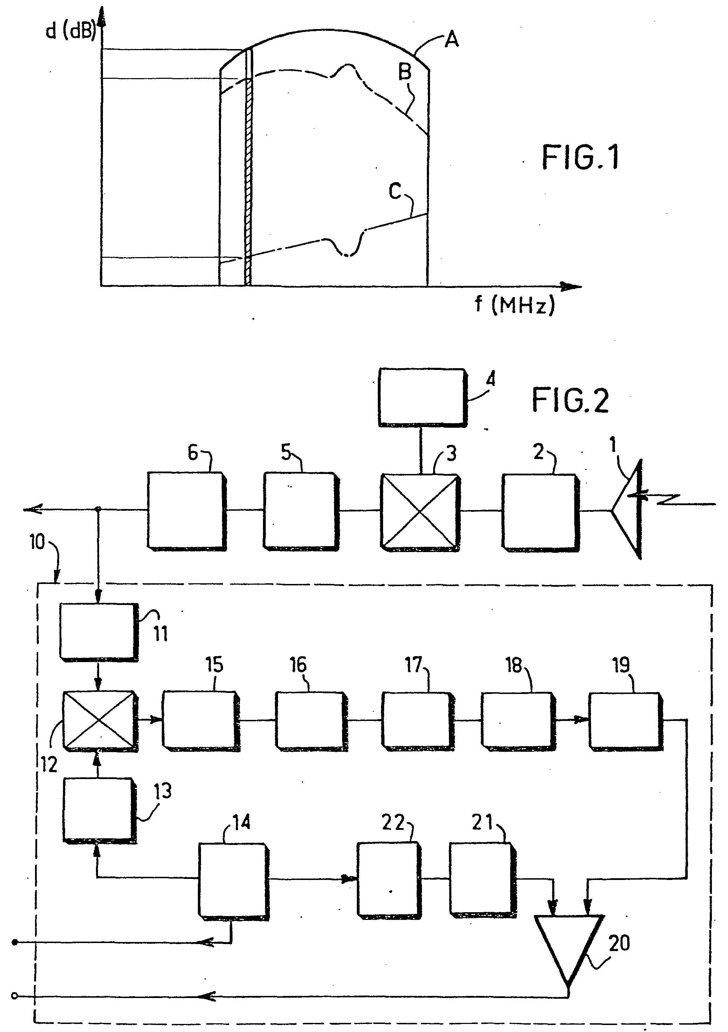

On va tout d'abord décrire le principe du procédé de mesure selon l'invention en se référant à la figure 1, où la fréquence (en MHz) est portée en abscisse et la densité spectrale (en dB) est portée en ordonnée.

Dans une liaison hertzienne numérique, le signal numérique qui module la porteuse hyperfréquence est brassé (scramblé) et est par conséquent aléatoire ou semi-aléatoire. Il en résulte que le spectre de la porteuse modulée est normalement du type sin x/x. La courbe a représente un tel spectre de fréquence. Dans le cas d'une transmission à un débit de 140 Mbits/s, on aura par exemple un spectre centré sur 140 MHz (fréquence intermédiaire de la station de réception) et une bande passante de 50 MHz pour une modulation à huit états de phase.

Pour déterminer les distorsions dues aux phénomènes d'évanouissement, on découpe la bande passante en bandes élémentaires, par exemple en 40 bandes de 1,25 MHz chacune, et on mesure la puissance reçue dans chacune des bandes élémentaires.

La durée totale de la mesure doit être définie en fonction de la rapidité d'évaluation des phénomènes d'évanouissement. On estime en générale que la vitesse maximale d'évolution est de 100 dB/s, ou 1 dB/10 ms. On peut alors choisir une durée totale de mesure de l'ordre de quelques millisecondes, par exemple de 5 ms.

Dans le cas où l'on effectue le découpage de la bande passante en 40 bandes élémentaires, cela donne à peu près 0,1 ms par mesure individuelle. Avec un débit de 140 Mbits/s, cette durée de 0,1 ms représente 14 000 bits. Compte tenu du brassage du signal numérique transmis, ce nombre est suffisant pour que la mesure de la puissance reçue dans une bande individuelle ait une bonne précision. On obtient ainsi 40 valeurs de mesure qu'on a réunies par la courbe B de la figure 1. Sur cette figure 1, l'aire de la zone hachurée représente la puissance reçue dans la bande élémentaire correspondante.

Si ensuite on soustrait ces valeurs de mesure des valeurs théoriques correspondantes, telles qu'elles peuvent être définies à partir de la courbe A, on obtient 40 valeurs à partir desquelles on peut déduire les caractéristiques d'une courbe C représentant, en quelque sorte, la courbe de transfert instantanée du milieu de propagation, si l'on considère celui-ci comme un quadripôle.

Ces caractéristiques sont ensuite utilisées pour commander un dispositif de correction de telle manière que sa courbe de transfert soit constamment duale de la courbe C.

On se réfère maintenant à la figure 2 qui représente une partie d'une station de réception hertzienne équipée d'un dispositif de mesure fonctionnant suivant le procédé décrit plus haut.

La figure 2 ne montre que les parties hyperfréquence et fréquence intermédiaire (F.I.) de la station de réception.

Cette station comprend, de façon classique, une antenne 1, un filtre passe-bande de réception 2, un mélangeur 3 auquel est relié un oscillateur local 4, un préamplificateur 5 et un amplificateur F.I. 6 à contrôle automatique de gain.

Le dispositif de mesure selon l'invention, désigné dans son ensemble par la référence 10, est monté à la sortie de l'amplificateur 6. Il comprend à son entrée un filtre 11 à large bande centré sur la fréquence intermédiaire, soit 140 MHz dans l'exemple décrit. Le signal filtré est appliqué à un analyseur de spectre comprenant les éléments 12 à 19 qu'on va décrire plus en détail ci-après. Le signal filtré est appliqué à une entrée de mélangeur 12 dont l'autre entrée reçoit d'un synthétiseur de fréquences 13 un signal de fréquence déterminée.

Le synthétiseur est commandé par un séquenceur de balayage 14 de manière à fournir successivement des fréquences séparées par un pas de 1,25 MHz sur une plage de 50 MHz. Le signal issu du mélangeur 12, dont la fréquence est égale à la différence des fréquences entrantes, est appliqué à un filtre passe-bande 15 ayant une largeur de bande de 1,25 MHz, et on obtient ainsi le découpage en bandes élémentaires décrit ci-dessus. On peut utiliser par exemple un filtre 15 centré sur 70 MHz, auquel cas le synthétiseur délivrera des fréquences s'étageant de 185 à 235 MHz.

Le signal filtré, après amplification dans un amplificateur approprié 16, est appliqué à un détecteur de niveau 17, dont la sortie est reliée à un intégrateur 18 qui effectue l'intégration sur la durée de mesure prévue, 0,1 ms dans l'exemple décrit. L'intégrateur 18 fournit ainsi un signal représentatif de la puissance moyenne sur une bande élémentaire donnée, lequel signal, après passage dans un amplificateur logarithmique 19, est appliqué à l'une des entrées d'un amplificateur différentiel 20.

L'autre entrée de l'amplificateur différentiel 20 est reliée, par l'intermédiaire d'un convertisseur numérique-analogique 21, à une mémoire 22 dans laquelle sont inscrites les puissances théoriques, telles qu'on peut les déduire de la courbe A de la figure 1, pour les différentes bandes élémentaires. Il faut noter à ce sujet que le spectre représenté par la courbe A n'est pas strictement en sin x/x, car il faut prendre en compte les corrections apportées par les différents filtres (filtre 2, filtre 11).

La mémoire 22 délivre successivement les puissances relatives aux différentes bandes élémentaires également sous la commande du séquenceur 14, de manière que la valeur théorique et la valeur mesurée appliquées à l'amplificateur 20 concernent bien la même bande élémentaire.

Finalement, la tension délivrée par l'amplificateur 20 représente l'affaiblissement dû au milieu de propagation sur une bande élémentaire donnée. L'amplificateur 20 fournit ainsi au total 40 valeurs de mesure. D'autre part, le séquenceur 14 fournit sous forme codée les fréquences auxquelles sont relatives ces valeurs de mesure, ce qui permet de calculer les caractéristiques de la courbe C de la figure 1.

Ces informations sont avantageusement fournies à un dispositif de correction (non représenté) monté par exemple à la sortie de l'amplificateur F.I. 6 et conçu pour compenser les distorsions dues au milieu de propagation.

**Revendications**

1. Procédé pour mesurer les distorsions imposées par le milieu de propagation à des signaux transmis, dans une bande de fréquence déterminée, par un faisceau hertzien numérique, caractérisé par le fait qu'on mesure la puissance moyenne respectivement reçue dans une pluralité de bandes de fréquence élémentaires réparties à l'intérieur de ladite bande de transmission et appartenant à ladite bande et on soustrait les valeurs mesurées des puissances théoriques relatives aux bandes élémentaires respectives.

2. Dispositif pour la mise en oeuvre du procédé selon la revendication 1, destiné à mesurer les distorsions imposées par le milieu de propagation à des signaux transmis dans une bande de fréquence déterminée par un faisceau hertzien numérique et reçus par une station de réception hertzienne, caractérisé par le fait qu'il comprend un analyseur de spectre (12—19) relié à la sortie de l'amplificateur à fréquence intermédiaire (6) de la station de réception, un séquenceur de balayage (14) commandant ledit analyseur de manière que l'analyseur délivre successivement la puissance moyenne du signal reçu dans différentes bandes de fréquence élémentaires réparties à l'intérieur de la bande de transmission, une mémoire (22) dans laquelle sont enregistrées les puissances théoriques relatives aux différentes bandes élémentaires, ladite mémoire étant également commandée par le séquenceur (14), et un amplificateur différentiel (20) dont les entrées sont reliées à la sortie de l'analyseur de spectre (12—19) et à la mémoire (22).

## Patentansprüche

1. Verfahren zur Messung von Verzerrungen, die durch das Ausbreitungsmedium auf Signale aufgeprägt werden, die in einem bestimmten Frequenzband durch numerische Richtfunkverbindung übertragen werden, dadurch gekennzeichnet, daß man die mittlere Leistung mißt, die jeweils in einer Vielzahl von innerhalb des vorgegebenen Übertragungsbandes verteilten und zu diesem Band gehörenden Elementar-Frequenzbändern empfangen wird, und daß man die gemessenen Werte von den theoretischen Leistungen der jeweiligen Elementar-Frequenzbänder substrahiert.

2. Einrichtung zur Durchführung des Verfahrens nach Anspruch 1 zur Messung von Verzerrungen, die durch das Ausbreitungsmedium auf Signale aufgeprägt werden, die in einem bestimmten Frequenzband durch numerische Richtfunkverbindung übertragen und von einer Richtfunkempfängerstation empfangen werden, dadurch gekennzeichnet, daß sie einen Spektralanalysator (12—19), der an den Ausgang eines Zwischenfrequenzverstärkers (6) der Empfängerstation angeschlossen ist, einen Abtastungssortierer (14), der den Spektralanalysator derart steuert, daß dieser aufeinanderfolgend die mittlere Leistung des Signals liefert, welches jeweils in den einzelnen Elementar-Frequenzbändern empfangen wird, die innerhalb des Übertragungsbandes verteilt sind, einen Speicher (22), in dem die theoretischen Leistungen der jeweiligen Elementar-Frequenzbänder eingespeichert werden und der ebenfalls von dem Sortierer (14) gesteuert wird, und einen Differentialverstarker (20) enthält, dessen Eingänge an den Ausgang des Spektralanalysators (12—19) und an den Speicher (22) angeschlossen sind.

## Claims

1. A method for measuring the distortions imposed by the propagation medium to signals transmitted in a determined frequency band, by a digital microwave link, characterized in that it comprises the steps of measuring the average power respectively received in a plurality of elementary frequency bands distributed within said transmission band and belonging to said band, and subtracting the measured values from the theoretical powers pertaining to the respective elementary bands.

2. A device for carrying out the method of claim 1, for measuring the distortions imposed by the propagation medium to signals transmitted in a determined frequency band by a digital microwave link and received by a microwave receiver station, characterized in that it comprises a spectrum analyser (12—19) connected to the output of the intermediate frequency amplifier (6) of the receiver station, a sequence scanning unit (14) controlling said analyser so that the analyser derives in succession the average power of the signal received in various elementary frequency bands distributed within the transmission band, a store memory (22) in which are stored the theoretical powers pertaining to the various elementary bands, said memory being also controlled by the sequence scanning unit (14), and a differential amplifier (20) having its inputs connected to the output of the spectrum analyser (12—19) and to the store memory (22).

0 003 203

d (dB)

A

B

C

f (MHz)

FIG.1

FIG.2

4

6   5   3   2   1

10

11

12   15   16   17   18   19

13   14   22   21

20

1